(19) Europäisches Patentamt
European Patent Office
Office européen des brevets

(11) **EP 4 345 499 A1**

(12) **EUROPEAN PATENT APPLICATION**

(43) Date of publication:
**03.04.2024 Bulletin 2024/14**

(21) Application number: **22198506.2**

(22) Date of filing: **28.09.2022**

(51) International Patent Classification (IPC):
**G01S 13/42** $^{(2006.01)}$    **G01S 13/68** $^{(2006.01)}$
**G01S 13/91** $^{(2006.01)}$    **G01S 13/931** $^{(2020.01)}$
**G01S 7/40** $^{(2006.01)}$    G01S 13/02 $^{(2006.01)}$

(52) Cooperative Patent Classification (CPC):
**G01S 7/4026; G01S 13/426; G01S 13/685;**
**G01S 13/931;** G01S 13/4463; G01S 2013/0254

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Provizio Limited**
**V94 VY47 Limerick (IE)**

(72) Inventors:
• **Humphrey, Denver**
  **Ballymena, BT43 7HD (GB)**
• **Ludlow, Peter**
  **Lisburn, BT28 3RW (GB)**
• **Christie, Steven**
  **Drumbo, BT27 5TU (GB)**

(74) Representative: **Purdylucey Intellectual Property**
**6-7 Harcourt Terrace**
**D02 FH73 Dublin 2 (IE)**

(54) **TWO-WAY RADAR BEAM PATTERN STEERING**

(57)    Problem

The application addresses the problem that the uniqueness and accuracy for determining the target angle, is negatively affected by the side lobes included in the two-way antenna pattern.

Solution

Based on a MIMO interface, a beamsteering methodology is presented that uses a lookup table to decide whether a target is in the main beam direction of the antenna, or whether it is in the direction of a sidelobe. To create said look-up table, a reference return signal of the main lobe is measured. Then different levels for different side lobes are measured by steering the main lobe to the position of the side lobes.

After the look-up table is created, it is known which target results in which return signal at the main and the side lobes. To exclude ambiguities, the main lobe is steered to the left and to the right when receiving target data. If the different signal levels are compared, it can be determined whether the target is on the left right or frontal.

FIG.9

**Description**

**Field**

The present disclosure relates to a two-way radar beam pattern steering, and more particularly to detecting objects using side lobes of the two-way radar beam pattern.

**Background of Invention**

In radar systems, the antenna array farfield radiation pattern typically comprises of a number of local maxima and minima over the 3D space. The highest maxima is known as the main lobe or main beam, and may either be fixed or scannable using hardware or digital signal processing techniques. The other maxima are known as sidelobes. Targets detected by the radar are typically assumed to arrive from the angular direction corresponding to the main beam. However, at angles corresponding to the sidelobes, the level of the transmitted (or received) signal is high when compared to other regions, and is not negligible when compared to the region where the main beam is focused. Accordingly, when sidelobes are high, ambiguity results, as the position and number of the detected objects comes into doubt, as target reflections can appear from either the angular direction of the main beam or the sidelobe, and clutter (or unwanted echoes) results.

To resolve this issue, many methods of sidelobe cancellation (SLC) have been reported. In SLC systems, the basic principle of subtracting the interference signal (caused by the sidelobes) from the antenna output is used, and in this way is like many of the adaptive cancellation techniques used to remove interference and multipath signals in today's communication systems. Even for radars with inherently low sidelobe levels, the issue can appear as the result of an electronic attack or 'jamming' rather than due to clutter caused by signals picked up by sidelobes within the radar signal. Thus, when radars are jammed, detection clutter is caused by an external signal rather than by an inherent property in the radar.

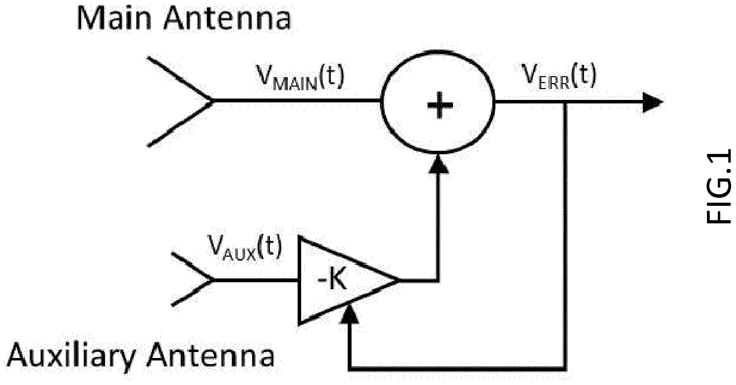

FIG.1 illustrates a basic interference canceller, where the antenna at the top represents the 'main' radar antenna ($V_{MAIN}(t)$) and the antenna at the bottom is an auxiliary antenna ($V_{AUX}(t)$) used to gather information on the interference signal caused by either a jamming signal or signal returns from sidelobes. The inverting gain block (K) is adjusted according to the error voltage, $V_{ERR}(t)$, which is formed by subtracting a weighted version of the auxiliary channel signal, $V_{AUX}(t)$, from the main channel signal, $V_{MAIN}(t)$.

$$V_{ERR}(t) = V_{MAIN}(t) - K\,V_{AUX}(t) \dots\dots\dots\dots\dots\dots\dots (1)$$

When the value of K is set correctly, it can be seen that the error signal, $V_{ERR}(t)$, only contains the target, or desired, signal. Of course, FIG.1 assumes that the auxiliary channel signal consists of only the interference signal, and this is unlikely in practice.

The sidelobe cancellation (SLC) can be considered as an extension of Space-Time Adaptive Processing (STAP), which is a signal processing technique that filters in the space-time domain over multiple dimensions, using multi-dimensional signal processing techniques, and is aimed at removing interference. In this respect, STAP has been used in MIMO radars specifically to improve spatial resolution for the large amounts of clutter created by MIMO radar virtual arrays.

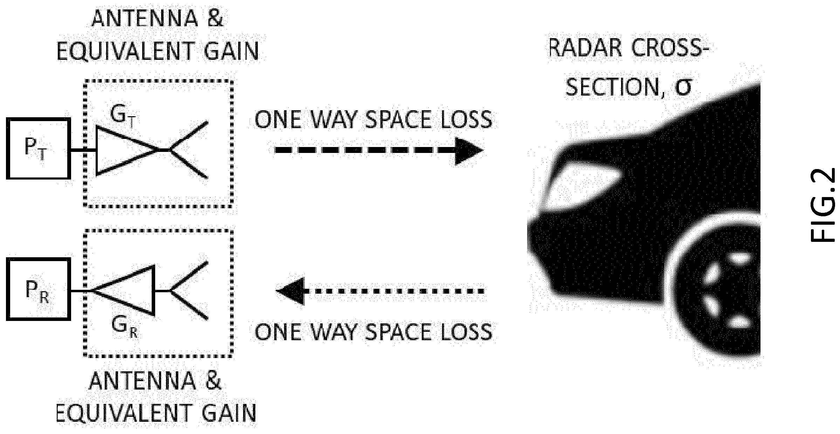

FIG.2 shows a radar equivalent circuit signal path. From this, the known radar equation is derived:

$$P_r = P_t G_t(\theta,\varphi) G_r(\theta,\varphi) \left[\frac{\lambda^2}{(4\pi R)^2}\right] \left[\frac{4\pi\sigma}{\lambda^2}\right] \left[\frac{\lambda^2}{(4\pi R)^2}\right] \dots\dots\dots\dots\dots\dots\dots (2)$$

where $P_r$ is the received power, Pt is the transmitted power, $G_t(\theta,\varphi)$ is the transmit antenna gain (which varies with angles $\theta$ and $\varphi$ in a spherical coordinate geometry), $G_r(\theta,\varphi)$ is likewise the receive antenna gain, $\lambda$ is the wavelength of the transmit frequency, R is the distance to the target object and $\sigma$ is the radar cross-section (RCS) of the target object.

The combined term $G_t(\theta,\varphi)G_r(\theta,\varphi)$ (hereafter referred to as $G_tG_r$) is referred to as the two-way antenna gain and is often plotted as a two-way radiation pattern which may take the form of a 3D plot over the spherical coordinate geometry, or as a 2D 'cut' where either $\theta$ or $\varphi$ are set to a constant value. The two-way radiation pattern is therefore an important design component in a radar, as its design and modification have a direct impact on the 3D space region where interference or clutter can arise and therefore appear in the radar detections. In this respect, the sidelobe levels of the two-way pattern are typically kept to less than $1/1000^{th}$ of the power of the main beam to minimise the probability of clutter detections are made because of the radar's antenna pattern. There are a number of methods used to do this in antenna arrays and more specifically in a MIMO radar, such as 'scaling/tapering/ weighting' to form a beam pattern where the signal strength to, or from, different antenna elements (or the individual radiators within the overall antenna) is amplified or attenuated to manipulate the overall shape of the combined beam. Another method pertains to 'Placement' where the spacings between the antenna elements within an array may be varied, thus changing the way their radiation fields combine, and in that way changing the overall beam shape.

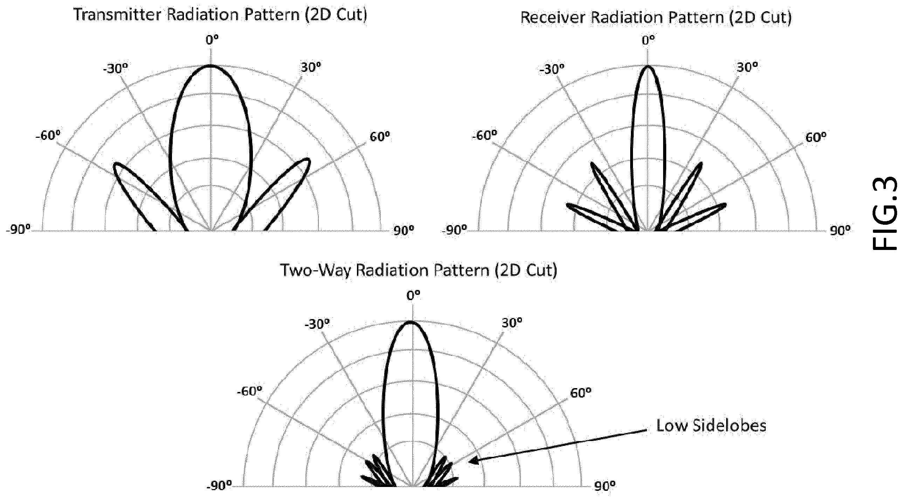

By considering the $G_tG_r$ term more closely, it can be inferred that by aligning angular regions where the transmitter radiation pattern, Gt, is at a minimum to points where the receiver radiation pattern, $G_r$, is a maximum or vice versa, the resulting two-way pattern will have low sidelobes or no regions prone to interference or signal clutter. FIG.3 illustrates the two-way pattern having low sidelobes or no regions prone to interference or signal clutter. However, such methods are often difficult to achieve and require more complex antenna feeding structures, larger numbers of antenna elements in the array and a larger antenna aperture (or area).

Further, in a MIMO radar, multiple transmitters and receivers work together and antennas are placed close to each other and act together to form a 'virtual' beam forming array. However, the ability to shape this virtual array in the manner described previously is limited, because the transmit and receive antenna elements typically have radiation patterns with very wide main lobes (typically > 80°), with the angle processing carried out digitally, for example, using the digitally sampled mixer output of the transmit signal with the receive signals from each receive antenna. In other embodiments, where the beamforming network is fixed or uses a network where beam shaping is made difficult (such as in lens type structures which have the advantage that by varying the shape of a lens or their geometry relative to the antenna elements, multibeam radars with various FOVs (Fields Of View) can be designed), such structures tend to have larger sidelobe levels which must be accounted for, or removed, when decoding the radar signal returns.

In view of the above, there is a need for an antenna configuration that facilitates removal of signal clutter from radar signal detections, and also simplifies radar antenna designs, and radar signal processing algorithms.

## SUMMARY OF INVENTION

The present invention relates to an electronic beam-steering antenna.

In an aspect of the present invention, there is provided a method of sensing an environment, using a radar system. The method includes applying a first progressive phase shift between a plurality of antenna elements of the radar system, in addition to a conventional phase shift applied between the plurality of antenna elements for detecting an object at a boresight of a two-way radiation pattern of the radar system,
recording signal return levels of a main lobe, and at least one side lobe of the two-way radiation pattern upon application of the first progressive phase shift, wherein the first progressive phase shift moves the main lobe to a position other than boresight, and increases a signal return level of at least one sidelobe, and detecting at least one object at a position off-boresight based on the increased signal return level of the at least one sidelobe.

In an embodiment of the present invention, the plurality of antenna elements includes a plurality of simultaneously excited transmit antenna elements of a MIMO radar.

In an embodiment of the present invention, the method includes applying a first negative progressive phase shift between the plurality of antenna elements, in addition to the conventional phase shift, wherein the first negative progressive phase shift is the negative of the first progressive phase shift, and moves the main lobe to a position other than boresight, and increases a level of at least one sidelobe at other side of the main lobe to detect at least one object at a position off-boresight at the other side.

In an embodiment of the present invention, the at least one object is detected based on a pre-defined look-up table, that includes a list of predefined progressive phase shifts, and for each pre-defined progressive phase shift, signal return levels for detecting an object at the boresight and either side off boresight.

In an embodiment of the present invention, the method further includes generating a look-up table by setting a two-way signal return level at the boresight as a reference level when the conventional phase shift is applied, applying the first progressive phase shift between the plurality of antenna elements, and determining for the first progressive phase shift, a first signal level for detecting an object at the boresight, a second signal level for detecting an object at a predetermined position off-boresight at one side, and a third signal level for detecting an object at a predetermined position off-boresight at another side, wherein each of the first, second and third signal levels are determined with respect to the reference level, and applying the first negative progressive phase shift, and determining for the first negative progressive phase shift, the first signal level for detecting an object at the boresight, the third signal level for detecting an object at a predetermined position off-boresight at one side, and the second signal level for detecting an object at a predetermined position off-boresight at another side.

In an embodiment of the present invention, the method includes generating the look-up table by applying a second progressive phase shift when an object is detected at the third signal level at a position off-boresight at one side upon application of the first progressive phase shift, concluding that a single object is present at the position off-boresight at one side, when the signal return level is less than the third signal level by a first value upon application of the second progressive phase shift, and concluding that one object is present at the boresight and another object is at the position off-boresight at one side, when the signal return level is less than the third signal level by a second value, upon application of the second progressive phase shift.

In an embodiment of the present invention, the method includes generating the look-up table by applying a second negative progressive phase shift when an object is detected at the third signal level at a position off-boresight at another side upon application of the first negative progressive phase shift; concluding that a single object is present at the position off-boresight at another side, when the signal return level is less than the third signal level by the first value upon application of the second negative progressive phase shift; and concluding that one object is present at the boresight and another object is at the position off-boresight at another side, when the signal return level is less than the third signal level by the second value, upon application of the second negative progressive phase shift.

In an embodiment of the present invention, the plurality of antenna elements includes a plurality of transmit antenna elements, a plurality of receive antenna elements, or a combination of both.

In an embodiment of the present invention, the progressive phase shift is applied to the plurality of transmit and receive antenna elements independently.

In an embodiment of the present invention, each receive antenna elements is configured in a fixed or switched beam shape.

In an embodiment of the present invention, the method further includes applying one or more subsequent progressive phase shifts between the plurality of antenna elements to introduce further attenuations on the sidelobes or on the main lobe of the two-way radiation pattern.

In an embodiment of the present invention, the plurality of antenna elements is configured using a beamforming network.

In an embodiment of the present invention, the method further includes recording and analysing signal return levels of at least one side lobe of the two-way radiation pattern upon application of a progressive phase shift, when a signal return level of at least one side lobe exceeds a predefined threshold.

In an embodiment of the present invention, the spacings between the plurality of antenna elements are unequal.

In an embodiment of the present invention, the plurality of antenna elements are the consecutive antenna elements.

In an embodiment of the present invention, there is provided a radar system, that includes at least one transmitter, a plurality of transmit antenna elements, and a plurality of variable phase-shifter components connected between the at least one transmitter and the plurality of transmit antenna elements, at least one receiver, a plurality of receive antenna elements, and a plurality of variable phase-shifter components connected between the at least one receiver and the plurality of receive antenna elements, and a radar control system.

There is also provided a computer program comprising program instructions for causing a computer program to carry out the above method which may be embodied on a record medium, carrier signal or read-only memory.

Various embodiments of the present invention disclose a two-way radar beam pattern steering method to gather relevant information from the inherent sidelobes of an antenna radiation pattern, instead of removing these sidelobes or mitigating them by methods such as filtering, to build a more detailed view of the environment. Such method removes signal clutter from radar signal detections, widen the field of regard, improve discrimination between targets in analogue and digital automotive radars, helps to identify if identified objects are real or a miscalculation, and enables simplification of radar antenna designs and radar signal processing algorithms.

## BRIEF DESCRIPTION OF DRAWINGS

The present invention will be more clearly understood from the following description of embodiments thereof, given by way of example only, with reference to the accompanying drawings, in which:-

FIG.1 illustrates the prior art configuration of a conventional Interference canceller;
FIG. 2 illustrates a radar equivalent circuit signal path;
FIG. 3 illustrates how the two-way radiation pattern shape changes when compared to the individual antenna radiation patterns;
FIG. 4 illustrates a conventional 8 receive element antenna uniform linear array configuration and its equivalent MIMO configuration using 2 transmit elements and 4 receive elements;
FIG. 5 illustrates the normalised 'boresight' radiation pattern for a 10-element linear array and elements spaced a half wavelength apart;
FIG. 6 illustrates three situations that give identical radar returns for objects detected using the array of FIG. 5;
FIG. 7 illustrates the effect of a progressive phase shift of 40 degrees on a 3-element phased array;
FIG. 8 illustrates the effect on the two-way polar radiation pattern of 3-element transmit antenna and a 10-element receive antenna, and a progressive phase shift of 40 degrees on the transmit antenna with the receive antenna scanned to 0 degrees;

FIG.9 illustrates a millimetre automotive radar system, in accordance with an embodiment of the present invention;

FIG.10 is a flowchart illustrating a method of scanning an environment surrounding a vehicle by the millimetre automotive radar system of FIG.9, in accordance with an embodiment of the present invention;

FIG. 11 illustrates the detection of a single object using sidelobes of a two-way radiation pattern of phased array radar, in accordance with an embodiment of the present invention;

FIG. 12 illustrates the detection of two objects using sidelobes of a two-way radiation pattern of a phased array radar, in accordance with an embodiment of the present invention;

FIG. 13 illustrates the detection of two objects with one occurring at boresight from a two-way radiation pattern of a phased array radar, in accordance with an embodiment of the present invention;

FIG. 14 illustrates the normalised array gain for a 12-element virtual array produced in a MIMO system of three transmit and four receive elements, which is digitally scanned to 0 degrees;

FIG. 15 illustrates the effect of a progressive phase shift of 40 degrees on the transmitted radiation pattern when all three transmit elements are excited simultaneously in the transmit array shown in FIG. 14; and

FIG. 16 illustrates the implementation of the current invention in a MIMO array.

## DETAILED DESCRIPTION OF THE DRAWINGS

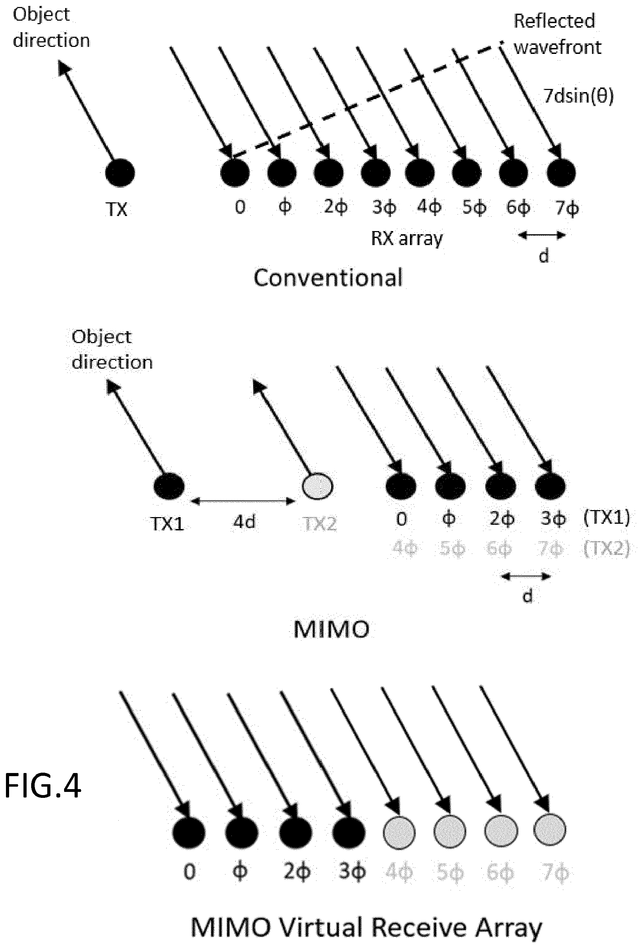

FIG. 4 shows a conventional 8 receive element antenna configuration and its equivalent MIMO configuration. Conventional digital beamforming architectures incorporate a dedicated receiver for each antenna element. However, as antenna array sizes become larger, the number of receivers required becomes exceedingly expensive for applications such as automotive radars. When a low angular accuracy is required, a wide beam is sufficient and is obtained when a small number of antenna elements are used. This means that a minimal number of receivers can be employed. However, when high angular accuracy is required, a narrower beam is needed, and a larger antenna array with additional elements must be utilised.

In the case of a Multiple Input Multiple Output (MIMO) radar, it is known to those related to the field, that measuring the magnitude and phase of the signal received at N receivers (multiple outputs) for each of M transmitters (multiple inputs), can be used to form a 'virtual' receive array that is larger than the physical receive array. Various modulation schemes for MIMO exist which aim to achieve orthogonality between the signals transmitted by each individual transmitter, such that they can be separated out on the receiver side. These include, but are not limited to, Time Division Multiplex (TDM), Frequency Division Multiplex (FDM) and Binary Phase Multiplex (BPM). For TDM MIMO, the transmitters sequentially transmit a signal one at a time. The receive elements then receive signals originating from each of the transmitters sequentially in time, and these can thereby be separated according to which transmitter the signal originated from. When the spacing between said transmit and receive elements is set accordingly, the signals at each receiver can be rearranged corresponding to the transmitter from which they originated, and the phase differences on each received radiated wave is such that an equivalent larger number of receive elements appear than are actually present, and thus 'virtual' elements are created. A virtual array is formed which consists of (M x N) number of elements, whilst only making use of (M + N) physical antenna elements, and which is therefore much larger than the physical number of transmitters and receivers required. The MIMO technique is therefore effective for improving the angular resolution of the radar for a given number of transceivers, or to decrease the number of transceivers required for a given angular resolution. The Digital Signal Processing (DSP) techniques for a TDM MIMO system are well known, where after ADC sampling, multiple Fast Fourier Transforms (FFT) and Constant False Alarm Rate (CFAR) thresholding are performed, amongst others, on each virtual element to determine the direction angle and velocity of each detection.

The focusing effect produced by such virtual arrays, in the case of a MIMO radar, can be expressed mathematically as the array factor, which is the complex valued far-field radiation pattern of an array of isotropic radiators (i.e. theoretical antennas which have no directivity, and radiate equal energy in all directions). The one-dimensional array factor for a linear array is calculated at each discrete angle $\theta$ using:

$$AF(\theta) = \sum_{n=1}^{N} w_n e^{j\frac{2\pi n}{\lambda}dsin(\theta)} \dots\dots\dots\dots\dots\dots\dots\dots\dots\dots\dots (3)$$

Where $w_n$ is the complex weighting (having an amplitude and phase) at the $n^{th}$ element in the array, and d is the element separation. The array factor is converted to decibels based on the following:

$$AF_{dB}(\theta) = 20log_{10}[AF(\theta)]\dots\dots\dots\dots\dots\dots\dots\dots\dots(4)$$

When the array factor is calculated using the element locations of an array, and is multiplied by the radiation pattern of a single physical antenna element in the array (i.e. the real element, having its own complex radiation pattern), the resulting radiation pattern provides a good approximation for the radiation pattern of the array (not including effects such as mutual coupling between elements in the physical array which may alter the pattern). In decibel form, the gain of the array is given by:

$$G_A(\theta) = AF_{dB}(\theta) + G_E(\theta) \dots\dots\dots\dots\dots\dots\dots (5)$$

Where $G_E$ is the gain of a single element (in dB).

By combining the array gain for each of the transmit and receive antennas, the two-way pattern is formed, and is equivalent to a pattern formed using all the elements in the virtual array of a MIMO radar, where:

$$G_{dB\ 2-way}(\theta) = G_{dB\ TX}(\theta) + G_{dB\ RX}(\theta) \dots\dots\dots\dots (6)$$

It is these functions that are used to calculate where possible sidelobes can appear (with the exclusion of external influencers such as a jamming signal) and are caused by the number of elements within the array and their positions with respect to each other.

With reference to FIG.4 again, it becomes apparent that when the MIMO system is used in TDM mode, all virtual elements in the MIMO system cannot be measured at the same time, with the measurement having to be repeated M times on each 'real' receive element, when the number of transmitters used is M.

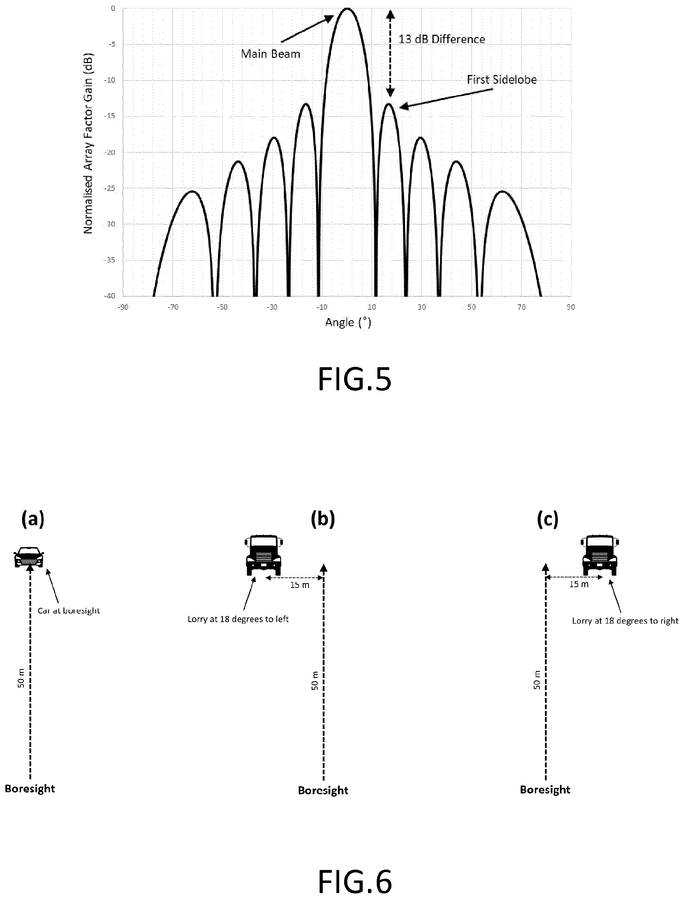

It has been stated earlier that one method of controlling sidelobes, when the antenna elements positions are fixed, is by scaling/tapering, which is achieved by adjusting the magnitude of the weighting term, $w_n$, and is applied by post processing using DSP techniques (e.g. MIMO) or as part of the feed network (e.g. phased array). This however normally has the adverse effect of reducing the array gain, unless amplification (therefore adding increased cost to the system) at certain elements is applied. The effect and problem of sidelobes when scaling is not applied is illustrated in FIG.5, where the normalized radiation pattern for a 10-element array, with spacings between elements set at a half-wavelength of the operating frequency and scanned at boresight, is shown. Here the first sidelobe appears at 18 degrees off-boresight and is approximately 13 dB lower than the main beam and means that a vehicle 15 m to the left or right of the radar at a distance of 50 m could be interpreted as being directly in front of the host vehicle. Furthermore, it is intuitively obvious that the amount of the radar signal that is 'reflected' by the detected object depends on the size of object, so a large vehicle to the side could be misinterpreted as a smaller one directly in front. The amount of radar reflection that objects provide is known as the radar cross section (RCS) of the object and varies depending on the size, shape, and material that the object is composed of. Common RCS values for automotive vehicles show that, on average, a truck or lorry gives 10-100 times as strong a radar reflection as a car, which in turn gives 10 times as strong a radar reflection as a motorcycle. This means that if a radar detects a truck on its sidelobe pattern at a particular distance/velocity, it could appear with the same received signal strength at boresight as a car would at boresight when it is at the same distance/velocity; or likewise, if it detects a car on its sidelobe pattern at a particular distance/velocity, it could appear with the same received signal strength at boresight as a motorbike would at boresight when it is at the same distance/velocity. FIG.6 shows three instances therefore that will give the same radar readings for single vehicle detections and the conditions previously described using an omnidirectional transmit antenna. The issue can be resolved for single vehicle detections using known sidelobe removal or mitigation techniques, but for the case illustrated in FIG. 6 if two or all these scenarios become merged, the radar detections would merge to show a single object.

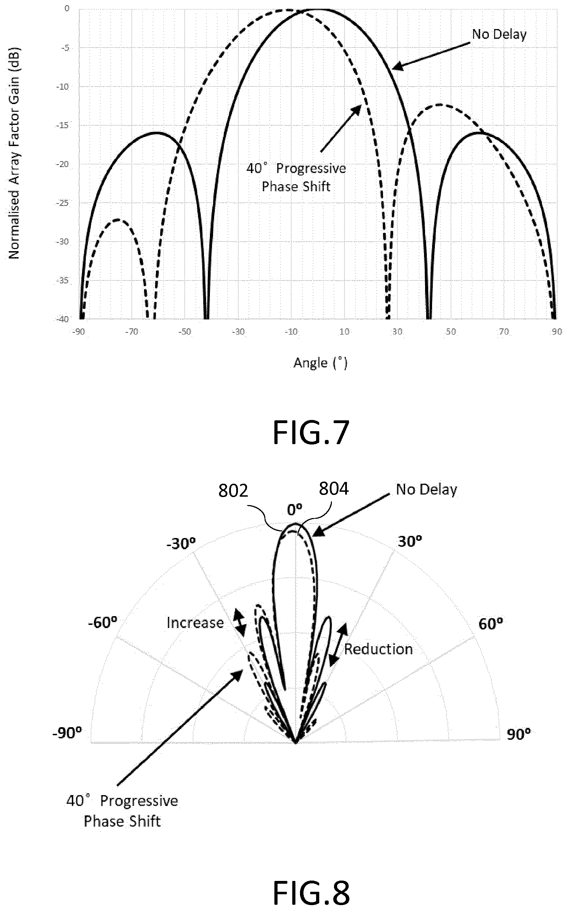

FIG. 7 shows the effect of a progressive phase shift of 40 degrees on a 3-element transmit antenna array. In phased arrays, a progressive phase delay may be added across the entire linear array of (n-1)Φ at the nth element where Φ is the added phase delay. Thus, to point the beam at each angle θ in the 3D space, a specific value of Φ exists where:

$$\phi = \frac{2\pi d}{\lambda} sin(\theta) \dots\dots\dots\dots\dots\dots\dots\dots\dots\dots\dots (7)$$

where d is the separation between elements and λ is the wavelength of the operating frequency.

When these conditions are applied, the direction of the peak radiation pattern or main beam is moved, without mechanically or physically moving the individual antennas, and for the described case would be moved to θ degrees off boresight. Thus, the steering angle of the array would be simply controlled by varying the phase of the individual elements. In FIG.7, the effect on a 3-element transmit antenna array is shown, where the radiation pattern of a normal 3-element array with no phase variation is compared to that for one with a progressive phased delay of 40 degrees, and which moves the main beam off boresight by -12.8 degrees. The phase delay in this case is specifically chosen for its effect on the two-way radiation using the 10-element receive array.

FIG. 8 compares the two two-way radiation patterns (with and without a progressive phase delay on the transmit antenna) on a polar plot, which is a more typical visualisation of the real-world condition. It also shows, how by angularly rotating the main beam, the effect on the sidelobes, and in particular the significant sidelobe at 18 degrees, is reduced by a further 10 dB. It is important to note here that the other sidelobe, occurring at -18 degrees, rises by a small amount (3.5 dB), while the two-way boresight level also decreases by < 1.4 dB. When the progressive phase delays on the transmit antenna are negatively reversed, the beam may be steered to the opposite direction and the effects on the sidelobes are reversed.

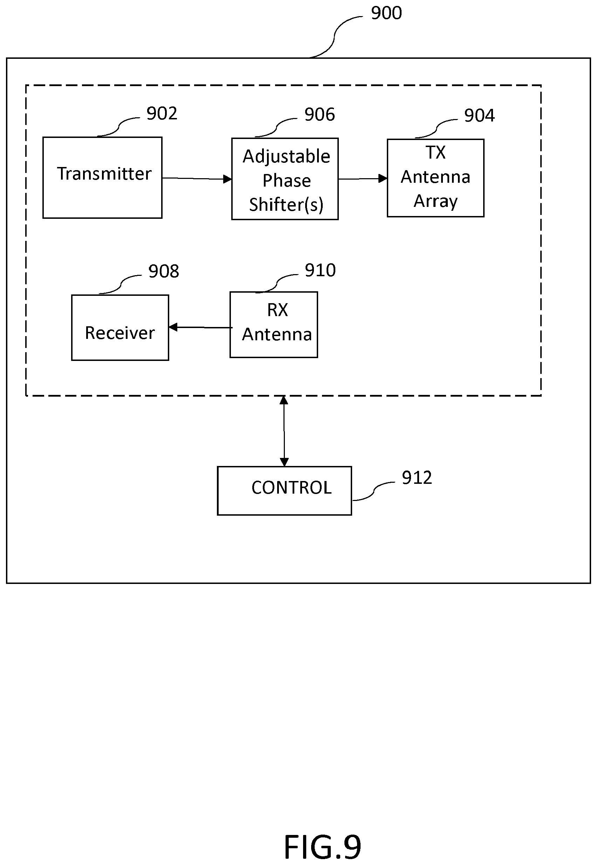

FIG.9 illustrates a millimetre wave automotive radar system 900, in accordance with an embodiment of the present invention. The millimetre wave automotive radar system 900 can be used in any radar system such as defence or warfare but is more specifically applicable for automotive radar safety systems (ADAS). The millimetre wave automotive radar system 900 includes at least one transmitter 902, a plurality of transmit antenna elements 904, and a plurality of variable phase-shifter or time-delay components 906 equalling the number of transmit antenna elements 904, and connected between the at least one transmitter 902, and the transmit antenna elements 904. The millimetre wave automotive radar system 900 further includes at least one receiver 908, and a plurality of receive antenna elements 910. The number of transmit and receive antenna elements 904 and 910 may be same or different, depending on the required angle resolution and radar detection range.

In one embodiment of the present invention, each receive antenna element 910 may be configured in a fixed or switched beam shape. In another embodiment of the present invention, the receive antenna elements of the radar system 900 can be configured using a beamforming network (such as a lens structure), which can move the main beam to a specific angle off boresight in the 3D space. Such designs are known to present significant challenges in keeping sidelobe levels low, but by applying the current invention at these points, the sidelobes can be used.

Alternatively, the lens-based beamforming network may be used at both the transmit and receive antenna elements where the time-delay components 906 are in the form of a lens with multiple input ports excited, with amplitude tapering to modify the beam shape. This can lead to a simpler and/or cheaper and/or easier to construct lens design, and can be used over a narrower Field of Regard with fewer transceivers to achieve a high angular resolution. Also, it can lead to having a larger number of antenna elements than receivers/transmitters, resulting in a reduction in FFT processing and easy implementation over a larger RF bandwidth.

In another embodiment of the present invention, a plurality of variable phase-shifter or time-delay components (not shown) equalling the number of receive antenna elements 910 may be connected between the at least one receiver 908, and the receive antenna elements 910. Thus, the 'phased array' (or alternative method of steering) can be moved from the transmit side to the receive side or the baseband. This provides increased flexibility to the PCB layout, potentially reducing the overall size and cost.

In yet another embodiment of the present invention, the plurality of variable phase-shifter or time-delay components 906 equal the total number of transmit and receive antenna elements 904 and 910.

In an embodiment of the present invention, the phase shifts between the transmit and receive antenna elements may be incorporated using switched delay lines.

In yet another embodiment of the present invention, the millimetre wave transmitters and receivers 902 and 908 are replaced by millimetre wave transceiver units.

Further, in one example, the elements 902-910 form a phased array radar.

The millimetre wave automotive radar system 900 further includes a radar control system 912 communicatively coupled to the elements 902-910 for controlling their operation. The radar control system 912 includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit.

In an embodiment of the present invention, the millimetre wave automotive radar system 900 is configured to electronically sense the surrounding environment of a vehicle using electromagnetic signals to determine object locations, remove erroneous object detections and to discriminate between objects.

Further, it is to be noted that the millimetre-wave automotive radar system 900 uses FMCW (Frequency Modulated Continuous Wave) modulation for signal transmission/reception. A FMCW waveform, also referred to as a chirp, is a complex sinusoidal waveform whose frequency increases linearly with time. FMCW radars transmit chirps in a periodic fashion, at a period referred to as the pulse repetition interval (PRI) and most commonly in a sawtooth configuration, although other chirp types are available. The resulting target echo from the scene would contain a delayed and attenuated copy of the transmitted chirp. By mixing the received signal with the transmitted chirp, a complex sinusoidal waveform results. This waveform is known as the beat signal, and its frequency is proportional to the distance to the detected object. Multiple chirps are collected within a single 'frame', which thereby allows determination of doppler frequency changes in the 'slow time' dimension.

The estimation of the beat frequency is usually implemented in the digital domain, after the beat signal has been digitally sampled. Since the beat frequency is much smaller than the radar bandwidth, a low-speed analogue to-digital converter (ADC) can be used. By sampling the beat signal and placing the samples for each chirp into separate columns of a matrix, the row indices of the matrix would correspond to the 'fast' time taken across a single chirp and the column indices will correspond to the 'slow' time taken across multiple chirps. By employing a Fast Fourier Transform (FFT) in each column of the matrix, the range of the object is determined through detection of the beat frequency, and by applying a further FFT along the rows of the matrix, the velocity of the object can be determined through detection of the doppler frequency. The use of these two FFTs is commonly named a 2D FFT and allows objects to be determined in both range and velocity. A concomitant benefit of performing the 2D FFT is that it lowers the noise floor through matched filtering of the object's beat and doppler frequencies. Evidently, the number of objects that fall into the same range-velocity bin will typically be small, depending on the range and velocity resolution of the radar.

While the range-velocity plot gives a lot of useful information, it lacks detail on object angular position. This is overcome by taking instantaneous range-velocity plots at each of the receive ports, rearranging the data to form the virtual array, and performing a 3rd 'angle' FFT or 3D FFT. The Constant False Alarm Rate (CFAR) follows, and is a thresholding step whereby only bins with a signal-to-noise that exceeds a certain threshold are retained. It is these levels that are directly related to the two-way radiation pattern. In other words, where an object is present, the signal returns would be higher, and therefore exceed the CFAR threshold, where the two-way radiation pattern level (or virtual array pattern) is higher.

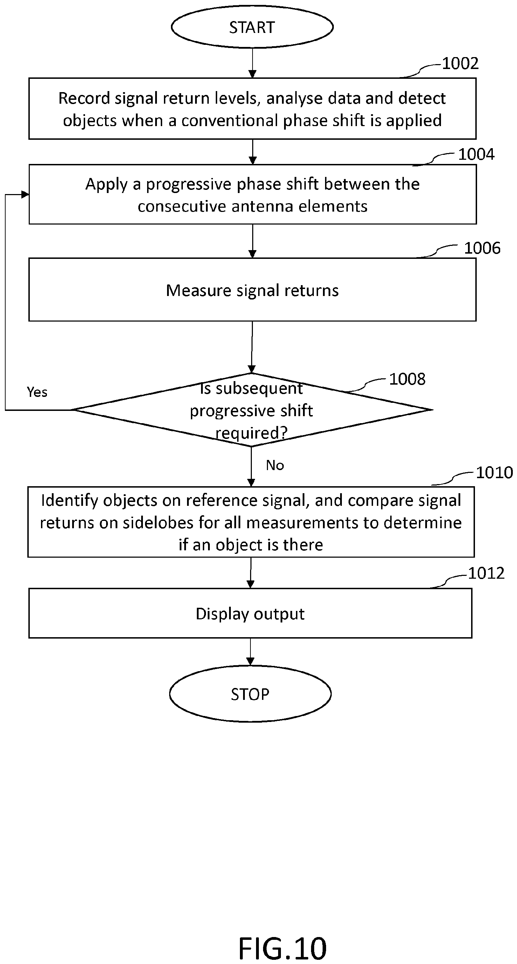

FIG.10 is a flowchart illustrating a method 1000 of scanning an environment surrounding a vehicle by a millimetre automotive phased array radar system 900. It would be apparent to one of ordinary skill in the art, that the method 1000 may be applicable for a phased array radar, as well as for a MIMO system, where measurements are taken with multiple transmitter elements active.

At step 1002 of FIG. 10, the radar control system 912 is configured to record signal return levels, at the receive elements, of the two-way radiation pattern of the system 900 for range, angle, and velocity, and analyse data and note object detections, when a conventional phase shift is applied between the consecutive antenna elements for detecting an object at the boresight. The signal level transmitted from the transmit elements upon application of the conventional phase shift may be hereinafter referred to as a base reference signal, a corresponding two-way beam pattern may be hereinafter referred to as a base reference pattern.

At step 1004, the radar control system 912 is configured to apply a progressive phase shift or time-delay between the consecutive antenna elements 904 in addition to the conventional phase shift. The antenna elements may be either the transmit antenna elements or receive antenna elements, or a combination of both. It would be apparent to one of ordinary skill in the art, that the progressive phase shift may be independently applied to the transmit and receive antenna elements, where this phase shift or time-delay can be varied to examine different areas of the 2D space. In an embodiment of the present invention, the progressive phase shift moves the main beam to positions either side of boresight, and increases a level of at least one sidelobe at the other side of the main beam to detect at least one object at a position off-boresight at the other side. In the context of the present invention, a progressive phase shift with amplitude weighing may be introduced between the multiple excited transmit antenna elements, to introduce a different attenuation on the sidelobe region to that on the main lobe.

The application of the progressive phase shift is explained in detail with reference to FIG.8. FIG.8 illustrates a base reference beam pattern 802 obtained by applying conventional shift among the antenna elements, and a two-way pattern 804 obtained by applying a progressive phase shift of 40° in addition to the conventional phase shift. Upon application of the 40° progressive phase shift, the signal level of the main beam decreases, but not as significantly (< 2 dB). The two-way sidelobe which appears at the other side of the main beam (due to reciprocity) would increase in size (~ 5 dB). These effects are reversed when the progressive phase shifts are made negative. The change in the signal returns indicate whether the object appears at the sidelobe location, and which one, or at the main beam position. By adding further progressive phase shifts and moving the main beam of the TX array to a position further off boresight, where one sidelobe level remains the same but the main beam is attenuated significantly, the additional change in the two-way signal level can be measured (and used to identify if more objects are present within the beam).

Referring back to FIG. 10, at step 1006, the radar control system 912 records signal return levels as detected by the normal operation of the phased array radar/MIMO radar. In an embodiment of the present invention, the radar control system 912 is configured to record signal return levels of at least two additional measurements, when their signal return levels exceed a predefined threshold, and compare the recorded signal levels with the reference level. At step 1006, the radar control system 912 is configured to analyse signal return levels and note object detections.

At step 1008, the radar control system 912 is configured to check if a subsequent progressive phase shift needs to be applied. The process goes back to step 1004, when a subsequent phase shift, or additional measurement, is required. The subsequent progressive phase shifts may be introduced between the multiple excited transmit antenna elements to introduce further different attenuations on the sidelobe region or on the main lobe. Also, similar progressive phase shifts which are the negative of the subsequent progressive phase shifts may be introduced between the excited transmit antenna elements.

When the subsequent phase shift need not be applied, then at step 1010, the radar control system 912 is configured to compare signal return levels and identify objects. When signal return levels for those measurements taken with a subsequent phase shift are compared with the base reference level measurement on at least one sidelobe, the radar control system 912 determines if an object is present on the sidelobe. At step 1012, the radar control system 912 is configured to display output.

In an embodiment of the present invention, the radar control system 912 is configured to detect at least one object using a pre-defined look-up table that includes a list of pre-defined progressive phase shifts, and corresponding signal return levels for identifying objects at boresight and on sidelobes at either side of boresight. The look-up table may be generated by setting a two-way signal return level at the boresight as the reference level, and then measuring signal return levels of the sidelobes with respect to the reference level for various progressive phase shifts.

An exemplary look up table is illustrated below in Table I,

Table I

| Reference Condition | Two-Way Signal Return Level | Conclusion |
|---|---|---|
| TX beam positioned at boresight | Reference Level | - |
| **Phase Shift Condition** | **Two-Way Signal Return Level** | **Conclusion** |
| 1) TX beam positioned at -12.8 degrees | First signal level: Reference Level - 1.4 dB | Object is at boresight |
| | Second signal level: Reference Level - 10 dB | Object is at +18 degrees |
| | Third signal level: Reference Level + 3.5 dB | Object is at -18 degrees |
| 2) TX beam positioned at +12.8 degrees | First signal level: Reference Level - 1.4 dB | Object is at boresight |
| | Second signal level: Reference Level - 10 dB | Object is at -18 degrees |
| | Third signal level: Reference Level + 3.5 dB | Object is at +18 degrees |

Table I illustrates a first progressive phase shift which is equivalent to a shift of 12.8 degrees of the main beam in an anticlockwise direction, between all 3 consecutive transmit antenna elements 904. The signal levels of any detections arising from this condition are compared with the base reference level. For this scenario, signal comparisons can be divided into three levels where the first signal level is equivalent to detections appearing at 1.4 dB below the reference level (indicating that the object is indeed at boresight), the second signal level is equivalent to detections appearing at 10 dB below the reference level (indicating that the object is on the first sidelobe in a clockwise direction at +18 degrees) and the third signal level is equivalent to detections appearing at 3.5 dB above the reference level (indicating that the object is on the first sidelobe in an anticlockwise direction at -18 degrees).

Table I further illustrates a first negative progressive phase shift between all 3 consecutive transmit antenna elements 904 and which is equivalent to a shift of 12.8 degrees of the main beam in a clockwise direction. For the first negative progressive phase shift, when detections appear at 10 dB below the reference level, the object is on the first sidelobe in an anticlockwise direction at -18 degrees, and when detections appear at 3.5 dB above the reference level, the object is on the first sidelobe in a clockwise direction at +18 degrees.

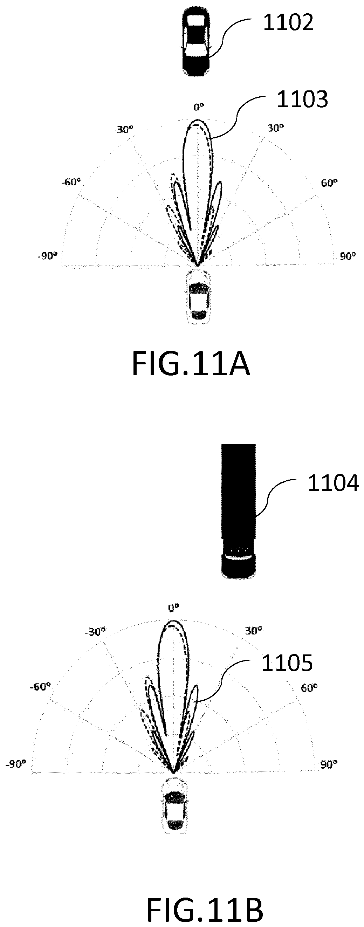

FIGs. 11A and 11B illustrate the detection of objects 1102 and 1104 respectively using sidelobes of a two-way radiation pattern of the millimetre wave automotive radar system 900 based on the Table I, in accordance with the beam-forming configuration of an embodiment of the present invention. An example of the object 1102 includes a car, and an example of the object 1104 includes a truck.

It has been previously stated that the RCS value of a truck/lorry 1104 is approximately 10 dB higher than that of a car 1102 and that the sidelobe level is about 13 dB lower than the main beam. However, by applying the first progressive phase shift, it is possible to determine if the detection is because of a small vehicle 1102 directly in front, i.e at boresight, or a larger vehicle 1104 to the side, i.e. off boresight. At a minimum, this detection relies on three array conditions, although those experienced in the field would appreciate that many chirps or frames at these conditions will be used. In the first condition, the main beam of the phased transmit array is positioned at boresight, the second condition positions the main beam at -12.8 degrees and the third condition positions the beam at 12.8 degrees.

Thus, based on the Table I, it would be possible to ascertain that the object 1102 is detected by the main lobe 1103 and the object 1104 is detected by the first sidelobe 1105. It will be appreciated that while FIGs. 11A and 11B show the condition for two different vehicle types, however, the invention is not restricted to this, and vehicles of a similar nature can also be detected.

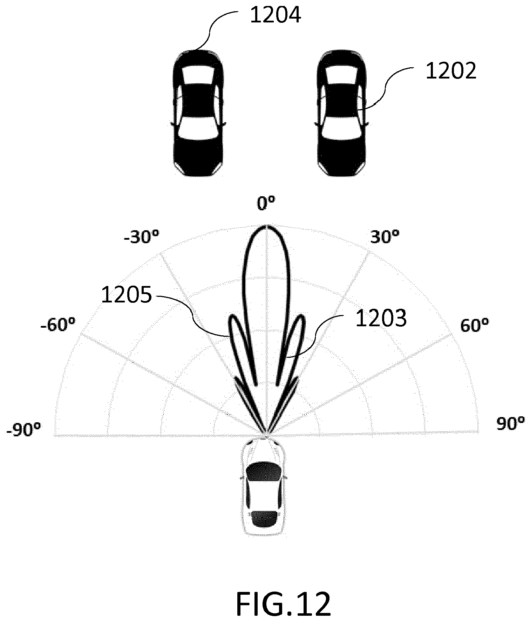

FIG. 12 illustrates the detection of two objects 1202 and 1204 using sidelobes of a two-way radiation pattern of the millimetre wave automotive radar system 900 based on the Table I, in accordance with an embodiment of the present invention. Herein, the two objects are two vehicles 1202 and 1204 that appear alongside each other. The two vehicles are of similar types. It will be appreciated that if the vehicles appear alongside each other as shown in FIG.12, phase shift conditions 1and 2 of Table I would both register an increase in the signal return, i.e. the objects 1202 and 1204 would appear at +18 and -18 degrees respectively, and are detected by the respective first sidelobes 1203 and 1205.

Thus, if a single object appears off boresight the + 3.5 dB reading would only appear for either condition 1 or condition 2, but a +3.5 dB reading on both conditions 1 and 2 means that the objects 1202 and 1204 simultaneously appear at +18 and -18 degrees respectively, and are detected by the respective two sidelobes 1203 and 1205.

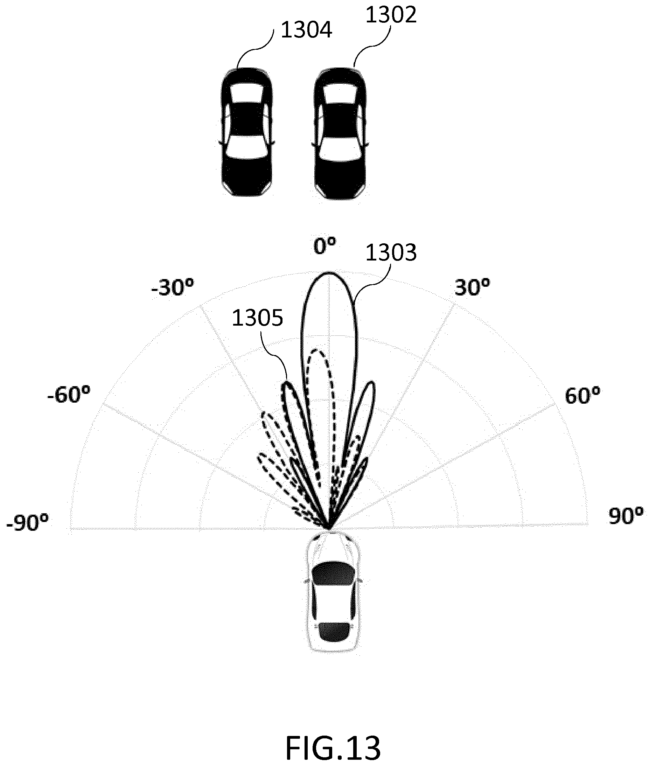

FIG. 13 illustrates the detection of two objects 1302 and 1304, with the object 1302 occurring at boresight (detectable by the main lobe 1303) and the object 1304 occurring off boresight (detectable by the first side lobe 1305) from the two-way radiation pattern of radar system 900. In such a scenario, Table I is insufficient to enable the radar control system 912 to determine two objects, in that one object 1302 is at boresight, and another object 1304 is off boresight. For such scenario, the radar control system 912 configures a second look-up table, as given below, that includes a second progressive phase shift in condition 3 and a second negative progressive phase shift in condition 4, and corresponding signal return levels with respect to the third signal levels of Table I.

Table II

| Phase Shift Condition | Two-Way Signal Return Level | Conclusion |
|---|---|---|
| 3) TX beam positioned at -35 degrees | Third signal Level - 3.5 dB (i.e. when an object is identified at -18 degrees by condition 1 in Table I) | Single object is at -18 degrees |
| | Third signal Level - 10 dB (. when an object is identified at -18 degrees by condition 1 in Table I) | Two objects at boresight and -18 degrees |
| 4) TX beam positioned at +35 degrees | Third signal level - 3.5 dB (when an object is identified at +18 degrees by condition 2 in Table I) | Single object is at +18 degrees |
| | Third signal level - 10 dB (when an object is | Two objects at boresight and +18 degrees |
| | identified at +18 degrees by condition 2 in Table I) | |

Table II illustrates phase shift condition (3) in which the second progressive phase shift is added between all 3 consecutive transmit antenna elements 904 to move the main beam by 35 degrees in the anticlockwise direction, when an object is already identified at -18 degrees in the anticlockwise direction upon application of the first progressive phase shift. Upon application of the second progressive phase shift, a single object is present at -18 degrees in anticlockwise direction, when the signal return level is 3.5 dB less than the third signal level (Table I - Phase shift condition (1)). Further, when upon application of the second progressive phase shift, the signal return level is 10 dB less than the third signal level (Table I), it can be concluded that one object is present at boresight and other at -18 degrees in anticlockwise direction.

Table II further illustrates phase shift condition (4) in which the second negative progressive phase shift is added between all 3 consecutive transmit antenna elements 904 to move the main beam by 35 degrees in the clockwise direction, when an object is already identified at +18 degrees in the clockwise direction upon application of the first negative progressive phase shift. Upon application of the second negative progressive phase shift, a single object is present at +18 degrees in clockwise direction when the signal return level is 3.5 dB less than the third signal level (Table I - Phase shift condition (2)). Further, when upon application of the second negative progressive phase shift, the signal return level is 10 dB less than the third signal level (Table I), it can be concluded that one object is present at boresight and other at +18 degrees in clockwise direction.

Various embodiments of the present invention thus facilitate measuring an observed scene using a pre-defined and adjusted two-way antenna radiation pattern (as defined in Tables I and II). It would be apparent to one of ordinary skill in the art, that the present invention is not limited to the predefined and adjusted two-way antenna radiation patten as defined in Tables I and II, and subsequent adjusted two-way antenna radiation patterns using further additional phase-shift values at either the transmit, or receive elements, or both the transmit and receive elements of the antennas in the system may be observed and recorded. The present invention therefore makes the distinction from a conventional phased array approach in that it actively uses sidelobes to expand the field of regard into several additional zones where detections can be made.

In an example, the angles and beam squint conditions as described in Tables I and II are for the specific case of a 3-element and 10-element two-way condition. However, it will be recognised that the invention can be expanded to any number of elements, sidelobes or even objects by changing the squint angles, and is not limited in any way by this.

Although, the above examples of Tables I and II have been described for a phased array radar, it is equally valid in a MIMO system where in accordance with the described invention, measurements are taken with multiple transmitter elements active, and a progressive phase shift applied between them in addition to those normally taken in a MIMO radar. In this respect, MIMO calculations are first made using the prior art MIMO radar method described, and the measurements are repeated using the method explained with reference to FIG.10. A number more than 1 of the M transmitters are excited simultaneously, with progressive phase shifts applied between them according to the spacing between the transmitter elements and the equivalent settings in Tables I and II which would be defined for the system. When the calculations are compared, ambiguity of detected targets derived from conventional MIMO calculations can be removed using this invention.

Furthermore, the pre-defined and adjusted antenna radiation patterns as explained in Tables I and II have been described for the ideal antenna array case, where a constant separation is maintained between every element in the array. However, if array sizes are made large (to reduce the beamwidth), it may be possible to remove some elements while maintaining the overall aperture size, and without having a detrimental effect on the array performance. In such cases, as more elements are removed, sidelobes levels would grow and can significantly reappear, affecting detections in the manner described previously. Such arrays are called sparse arrays and are advantageous as the number of required receivers in the radar, and therefore the cost, is reduced. However, the number of required receivers in such arrays is ultimately limited by the minimum number of elements that are required to maintain the array performance yet mitigating the 'regrowth' of these sidelobe levels to an acceptable level. Nevertheless, the described invention can be applied to such arrays to turn their limitations into an advantage.

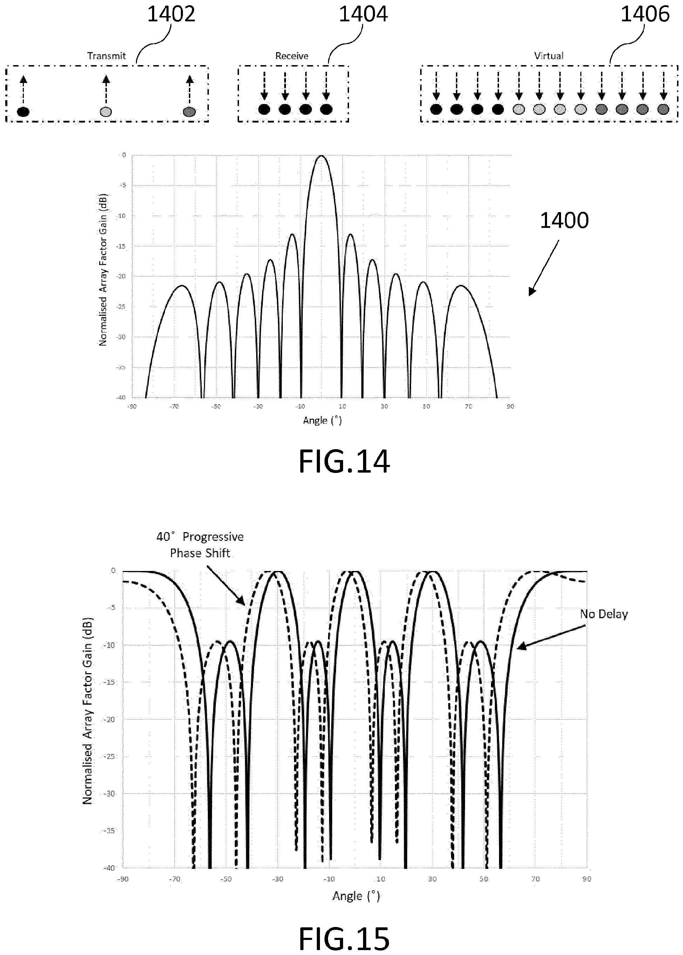

FIG. 14 shows the virtual array radiation pattern 1400, which is formed digitally for the case of a MIMO radar with three transmit antennas, 1402, and four receive antennas, 1404, designed so that the 12-element virtual array, 1406, has a half-wavelength separation between elements. In this case, all transmit elements transmit separately, although it has been shown in this invention that if all the transmit antennas transmit simultaneously (using DDMA, BPM or other types of modulation), the virtual (or two-way) radiation pattern 1400 is unchanged.

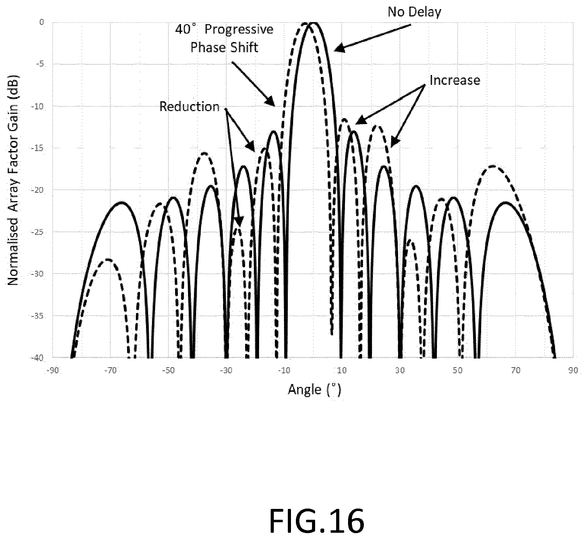

FIG. 15 illustrates the effect of a progressive phase shift of 40 degrees on the radiation pattern of the transmit array, 1402 of FIG. 14, when all three transmit elements are excited simultaneously. In the context of the present invention, a progressive phase shift may be added between the simultaneously excited transmit elements of the MIMO radar in a manner similar to that shown in FIG.7. It is noted that although the radiation patterns of FIG. 7 and FIG.15 both contain plots for 3-element arrays, their shapes are different due to the spacing between elements. However, the virtual or two-way radiation pattern plot in FIG.16 shows the same effect, where determinations of detections found by the sidelobes are made in a similar manner to that described previously. It would also be appreciated to those familiar in the field that the progressive phase shift could be added between the simultaneously excited receive elements without affecting the performance of the invention. It is a well-known technique in MIMO radars to mitigate sidelobes by using sub-arrays to remove the effect of sidelobes from the radar analysis. Such techniques include removing parts of the virtual array from the DSP analysis or analysing different parts of the virtual array before comparing to the full virtual array analysis. However, such techniques reduce the range over which detections can be made and is a distinction from the current invention.

In the specification the terms "comprise, comprises, comprised and comprising" or any variation thereof and the terms include, includes, included and including" or any variation thereof are considered to be interchangeable, and they should all be afforded the widest possible interpretation and vice versa.

The invention is not limited to the embodiments hereinbefore described but may be varied in both construction and detail.

**Claims**

1.  A method of sensing an environment, using a radar system, comprising:

    applying a first progressive phase shift between a plurality of antenna elements of the radar system, in addition to a conventional phase shift applied between the plurality of antenna elements for detecting an object at a boresight of a two-way radiation pattern of the radar system;
    recording signal return levels of a main lobe, and at least one side lobe of the two-way radiation pattern upon application of the first progressive phase shift, wherein the first progressive phase shift moves the main lobe to a position other than boresight, and increases a signal return level of at least one sidelobe; and
    detecting at least one object at a position off-boresight based on the increased signal return level of the at least one sidelobe.

2.  The method as claimed in claim 1, wherein the plurality of antenna elements includes a plurality of simultaneously excited transmit antenna elements of a MIMO radar.

3. The method as claimed in any preceding claim further comprising:
applying a first negative progressive phase shift between the plurality of antenna elements, in addition to the conventional phase shift, wherein the first negative progressive phase shift is the negative of the first progressive phase shift, and moves the main lobe to a position other than boresight, and increases a level of at least one sidelobe at other side of the main lobe to detect at least one object at a position off-boresight at the other side.

4. The method as claimed in any preceding claim, wherein the at least one object is detected based on a pre-defined look-up table, that includes a list of pre-defined progressive phase shifts, and for each pre-defined progressive phase shift, signal return levels for detecting an object at the boresight and either side off boresight.

5. The method as claimed in any preceding claim further comprising generating a look-up table by

setting a two-way signal return level at the boresight as a reference level when the conventional phase shift is applied;
applying the first progressive phase shift between the plurality of antenna elements, and determining for the first progressive phase shift, a first signal level for detecting an object at the boresight, a second signal level for detecting an object at a predetermined position off-boresight at one side, and a third signal level for detecting an object at a predetermined position off-boresight at another side, wherein each of the first, second and third signal levels are determined with respect to the reference level; and
applying the first negative progressive phase shift, and determining for the first negative progressive phase shift, the first signal level for detecting an object at the boresight, the third signal level for detecting an object at a predetermined position off-boresight at one side, and the second signal level for detecting an object at a predetermined position off-boresight at another side.

6. The method as claimed in claim 5 further comprising generating the look-up table by

applying a second progressive phase shift when an object is detected at the third signal level at a position off-boresight at one side upon application of the first progressive phase shift;
concluding that a single object is present at the position off-boresight at one side, when the signal return level is less than the third signal level by a first value upon application of the second progressive phase shift; and
concluding that one object is present at the boresight and another object is at the position off-boresight at one side, when the signal return level is less than the third signal level by a second value, upon application of the second progressive phase shift.

7. The method as claimed in claim 6 further comprising generating the look-up table by

applying a second negative progressive phase shift when an object is detected at the third signal level at a position off-boresight at another side upon application of the first negative progressive phase shift;
concluding that a single object is present at the position off-boresight at another side, when the signal return level is less than the third signal level by the first value upon application of the second negative progressive phase shift; and
concluding that one object is present at the boresight and another object is at the position off-boresight at another side, when the signal return level is less than the third signal level by the second value, upon application of the second negative progressive phase shift.

8. The method as claimed in any preceding claim, wherein the plurality of antenna elements includes a plurality of transmit antenna elements, a plurality of receive antenna elements, or a combination of both.

9. The method as claimed in any preceding claim, wherein the progressive phase shift is applied to the plurality of transmit and receive antenna elements independently.

10. The method as claimed in any preceding claim, wherein each receive antenna elements is configured in a fixed or switched beam shape, and preferably wherein the plurality of antenna elements is configured using a beamforming network.

11. The method as claimed in any preceding claim further comprising applying one or more subsequent progressive phase shifts between the plurality of antenna elements to introduce further attenuations on the sidelobes or on the main lobe of the two-way radiation pattern.

12. The method as claimed in any preceding claim, further recording and. analysing signal return levels of at least one side lobe of the two-way radiation pattern upon application of a progressive phase shift, when a signal return level of at least one side lobe exceeds a predefined threshold.

13. The method as claimed in any preceding claim, wherein the spacings between the plurality of antenna elements are unequal.

14. The method as claimed in any preceding claim, wherein the plurality of antenna elements are the consecutive antenna elements.

15. A radar system, comprising:

at least one transmitter, a plurality of transmit antenna elements, and a plurality of variable phase-shifter components connected between the at least one transmitter and the plurality of transmit antenna elements;
at least one receiver, a plurality of receive antenna elements, and a plurality of variable phase-shifter components connected between the at least one receiver and the plurality of receive antenna elements; and
a radar control system for implementing the method as claimed in any of claims 1-14.

Main Antenna

$V_{MAIN}(t)$

$+$

$V_{ERR}(t)$

$V_{AUX}(t)$

$-K$

Auxiliary Antenna

FIG.1

FIG.2

FIG.3

Object
direction

Reflected
wavefront

7dsin(θ)

TX

0 φ 2φ 3φ 4φ 5φ 6φ 7φ

RX array

d

**Conventional**

Object
direction

TX1 4d TX2

0 φ 2φ 3φ (TX1)
4φ 5φ 6φ 7φ (TX2)

d

**MIMO**

FIG.4

0 φ 2φ 3φ 4φ 5φ 6φ 7φ

**MIMO Virtual Receive Array**

17

FIG.5

FIG.6

FIG.7

FIG.8

FIG.9

START

Record signal return levels, analyse data and detect
objects when a conventional phase shift is applied
⌐1002

Apply a progressive phase shift between the
consecutive antenna elements
⌐1004

Measure signal returns
⌐1006

Is subsequent
progressive shift
required?
⌐1008

Yes

No

Identify objects on reference signal, and compare signal
returns on sidelobes for all measurements to determine
if an object is there
⌐1010

Display output
⌐1012

STOP

FIG.10

FIG.11A

FIG.11B

FIG.12

FIG.13

1402          1404                    1406

FIG.14

FIG.15

FIG.16

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/083395 A1 (ACHOUR MAHA [US] ET AL) 18 March 2021 (2021-03-18) | 1,15 | INV. G01S13/42 G01S13/68 |
| Y | * paragraphs [0019], [0020], [0021], [0027], [0029], [0031], [0032], [0033]; figures 3,4,5,7 * ----- | 4-14 | G01S13/91 G01S13/931 G01S7/40 |
| Y | JP H02 12082 A (TOSHIBA CORP) 17 January 1990 (1990-01-17) * paragraph [0001] * ----- | 4-14 | ADD. G01S13/02 |
| A | US 4 646 094 A (STEVENSON THEODORE E [US]) 24 February 1987 (1987-02-24) * page 4, column 2, paragraph 24-37 * ----- | 1-15 | |

TECHNICAL FIELDS
SEARCHED      (IPC)

G01S

The present search report has been drawn up for all claims

| Place of search | Date of completion of the search | Examiner |
|---|---|---|
| Munich | 30 January 2023 | Töpfer, Nils-Peter |

EPO FORM 1503 03.82 (P04C01)

**ANNEX TO THE EUROPEAN SEARCH REPORT
ON EUROPEAN PATENT APPLICATION NO.**

EP 22 19 8506

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2023

| Patent document cited in search report | | Publication date | Patent family member(s) | | Publication date |
|---|---|---|---|---|---|
| US 2021083395 | A1 | 18-03-2021 | EP | 3775976 A1 | 17-02-2021 |
| | | | JP | 2021521432 A | 26-08-2021 |
| | | | KR | 20200131349 A | 23-11-2020 |
| | | | US | 2021083395 A1 | 18-03-2021 |
| | | | WO | 2019200365 A1 | 17-10-2019 |
| JP H0212082 | A | 17-01-1990 | JP | 2597658 B2 | 09-04-1997 |
| | | | JP | H0212082 A | 17-01-1990 |
| US 4646094 | A | 24-02-1987 | NONE | | |

EPO FORM P0459

For more details about this annex : see Official Journal of the European Patent Office, No. 12/82